# EUROPÄISCHE PATENTSCHRIFT

(11) **EP 3 323 745 B1**
(45) Veröffentlichungstag und Bekanntmachung des Hinweises auf die Patenterteilung: **19.06.2019**
(21) Anmeldenummer: 17201599.2
(22) Anmeldetag: 14.11.2017
(51) Int. Cl.: B65C 9/02, B65G 47/84, B67C 7/00

(54) **BEHÄLTERBEHANDLUNGSMASCHINE UND VERFAHREN ZUR BEHANDLUNG VON BEHÄLTERN**
CONTAINER HANDLING MACHINE AND METHOD FOR HANDLING CONTAINERS
MACHINE DE TRAITEMENT DE RÉCIPIENTS ET PROCÉDÉ DE TRAITEMENT DE RÉCIPIENTS

(30) Priorität: 16.11.2016 DE 102016222497
(43) Veröffentlichungstag der Anmeldung: 23.05.2018
(73) Patentinhaber: GERNEP GmbH, 93092 Barbing (DE)
(72) Erfinder: HAMMERSCHMID, Martin, 93092 Barbing (DE); KRAMER, Stefan, 93092 Barbing (DE); LEDERER, Markus, 93092 Barbing (DE)
(74) Vertreter: Benninger, Johannes

(56) Entgegenhaltungen:
- WO-A1-2017/140397
- DE-C1- 4 416 373
- JP-A- H0 680 130
- JP-A- S63 138 940
- JP-A- 2011 162 338

## Beschreibung

Die vorliegende Erfindung betrifft eine Behälterbehandlungsmaschine mit den Merkmalen des unabhängigen Anspruchs 1 sowie ein Verfahren zur Handhabung und/oder Behandlung von Behältern mit den Merkmalen des unabhängigen Verfahrensanspruchs 7.

Eine gattungsgemäße Maschine und ein gattungsgemäßes Verfahren sind aus der DE 44 16 373 C1 bekannt.

Fertigungsstraßen und Handhabungsmaschinen mit Etikettierstationen zum Etikettieren von Behältern sind in zahlreichen Varianten bekannt. Eine bekannte Bauart von Behälterbehandlungsmaschinen sieht einen umlaufenden Betrieb vor, bei denen um vertikale Maschinenachsen rotierende Transportelemente für die Handhabung und den Transport der Behälter sorgen. Derartigen Behälterbehandlungsmaschinen verfügen üblicherweise über mindestens einen sog. Einlaufstern, mit dem die Behälter dem rotierenden Transportelement teilungsgerecht zugeführt werden, während die behandelten Behälter über einen Auslaufstern abgeführt werden können. Die Handhabung der Behälter im Bereich des Transportelements kann insbesondere deren Etikettierung vorsehen. Die Behälter stehen hierbei üblicherweise auf drehbaren Tellern und werden oberseitig fixiert, so dass sie während ihres Umlaufs auf dem Transportelement etikettiert werden können.

Da solche Maschinenkonfigurationen für die unterschiedlichsten Behältervarianten und Behälterformen eingesetzt werden, und da auch unregelmäßig geformte Behälter einer Etikettierung zugänglich sein sollen, ist es insbesondere für problematisch zu handhabende und/oder nicht staufähige Behälter, die zum Kippen oder Umfallen neigen, üblich geworden, die zu bearbeitenden Behälter mittels separater Halterungen zu befördern. Diese Halterungen, die auch als Schuhe, Transportschuhe oder Pucks bezeichnet werden, dienen der kippsicheren Beförderung der Behälter während ihrer Behandlung in den verschiedenen Bearbeitungsstationen. Üblicherweise werden die Behälter am Beginn einer Fertigungslinie in eine Öffnung der Halterung formschlüssig eingesetzt, wo sie kippsicher verbleiben, bis sie nach ihrer Befüllung, Verschließung und/oder Etikettierung bspw. einer Verpackungsstation zugeführt werden, wo sie aus der Halterung entnommen werden.

Da es allerdings bei manchen Behälterformen sowie insbesondere bei relativ kleinen Behältern vorkommen kann, dass die zu etikettierenden Bereiche der Behältermantelflächen zumindest teilweise von der den jeweiligen Behälter formschlüssig aufnehmenden Halterung bzw. vom Puck oder Schuh bedeckt werden, kann es notwendig sein, solche Behälter zumindest während ihrer Etikettierung aus der Halterung, dem Puck oder Schuh herauszuziehen und ggf. nach erfolgter Etikettierung wieder dort einzusetzen. Um solchermaßen mittels separater Halterungen beförderte Behälter außerhalb der Halterung etikettieren zu können, hält der Stand der Technik verschiedene Lösungen bereit.

So offenbart etwa die DE 28 09 308 A1 eine Etikettiervorrichtung mit kontinuierlich arbeitender Kinematik. Dort können Behälter bzw. Flaschen jeweils in Beförderungsträger hineingestellt und einer sog. Etikettierrolle zugeführt werden. Die Etiketierrolle besitzt Zellen, welche die Beförderungsträger mit den Behältern oder Flaschen aufnehmen kann. Die Flaschen können anschließend aus den Trägern herausgenommen und in Höhe einer oberen Stufe der Etikettierrolle positioniert werden. Nach Beendigung des Etikettiervorganges werden die Flaschen mittels eines Sternrades aus den Zellen herausgenommen. Dagegen bleibt die Kette mit den Beförderungsträgern während des Durchlaufens des Kreisbogens mit der Etikettierrolle verbunden und wird erst anschließend, am Anfang des Kreisbogens mittels einer sich synchron mit der Etikettierrolle drehenden Austrittsrolle aus der Etikettierrolle herausgenommen.

Aus der DE 295 12 840 U1 ist eine Vorrichtung zum Transportieren von Gegenständen in Halterungen bekannt, die es erlaubt, die Gegenstände zu Bearbeitungsstationen zu transportieren. Die Böden der Halterungen sind jeweils bewegbar ausgebildet, so dass zwischen einer ersten Stellung, in der die Halterung eine zu etikettierende Fläche des Gegenstandes wenigstens teilweise bedeckt und den Gegenstand in vorbestimmter Lage hält, und einer zweiten Stellung, in der die zu etikettierenden Fläche zur Etikettierung freiliegt, gewechselt werden kann.

Weiterhin offenbart die vorerwähnte, gattungsbildende DE 44 16 373 C1 eine Etikettiervorrichtung für Formgefäße, die jeweils in Transportschuh-Aufnahmeteilen eingesetzt werden, auf welche wiederum jeweils ein Transportschuh zur formschlüssigen Aufnahme eines Formgefäßes aufgesetzt werden kann. Oberhalb eines Transportschuh-Aufnahmeteils befinden sich sog. Tulpen, wobei die Transportschuh-Aufnahmeteile und die Tulpen jeweils vertikal beweglich zueinander geführt sind. Zum Etikettieren kann das Formgefäß aus dem Transportschuh herausgehoben werden. Nach Beendigung des Etikettierungsvorgangs kann das Formgefäß wieder für den weiteren Transport in den Transportschuh eingesetzt werden. Während eines Etikettierungsvorganges findet eine räumliche Trennung zwischen den Behältern und ihren jeweiligen Transportschuhen statt. Die räumliche Trennung kann mittels einer Hubeinrichtung ausgeführt werden, welche den Behälter vollständig aus dem Transportschuh herausnimmt, während der Behälter etikettiert wird, wonach er anschließend auch wieder in den Transportschuh hineingesetzt wird. Das Ausheben der Behälter aus dem Transportschuh und das Hineinheben in den Transportschuh erfolgt jeweils mit Hilfe einer Rampe. Jeder Behälter wird während des Etikettierens beabstandet vom zugehörigen Transportschuh und fluchtend zu diesem im Etikettierkarusell befördert.

Besonders anhand der in der DE 44 16 373 C1 offenbarten Etikettiervorrichtung wird ein wesentliches Problem dieser aus dem Stand der Technik in zahlreichen Varianten bekannten Bauart deutlich. So erfolgt das Etikettieren erst nach vollständiger Entnahme der Behälter aus dem Transportschuh, wobei die Behälter in ihren oberen Bereichen mittels der heb- und senkbaren Aufnahmetulpen gehalten werden. Diese Art der Behälterhandhabung kann jedoch nicht unter allen Umständen eine hinreichend exakte Führung und Lagestabilisierung des Behälters gewährleisten, wie es jedoch für einen möglichst exakten und schnell ablaufenden Etikettierungsvorgang wünschenswert ist.

Die WO 2014/161635 A1 offenbart eine Behälterbehandlungsmaschine sowie ein Verfahren zum Zu- und/oder Abführen von Behältern zu bzw. von einer solchen Behälterbehandlungsmaschine. Bei dieser bekannten Maschine können in Behälterträger eingesetzte Behälter einem Transferstern zugeführt werden. Im Bereich einer Übergabeposition können die Behälter mittels einer Hubeinrichtung an eine Behandlungsstation des Transportsystems übergeben werden. Die Behälterträger können in der Aufnahme des Transfersterns verbleiben. Nach Beendigung der Behandlung können die Behälter jeweils mittels der Hubeinrichtung abgesenkt und in einen Behälterträger eingesetzt werden.

Angesichts der aus dem Stand der Technik bekannten Lösungen kann es als vorrangiges Ziel der vorliegenden Erfindung angesehen werden, eine kompakte und leistungsfähige Handhabungs- und Behandlungsmaschine für in Transportschuhen zu befördernde Behälter zur Verfügung zu stellen, die eine hohe Zuverlässigkeit bei der Handhabung der Behälter bietet, insbesondere bei deren temporären Entnahme aus den Transportschuhen für besondere Behandlungszwecke wie etwa einer Etikettierung. Zudem soll die Erfindung ein entsprechendes Handhabungs- bzw. Behälterbehandlungsverfahren liefern, das auf kleinem Raum die geforderte Zuverlässigkeit bei der Handhabung der Behälter bieten kann, insbesondere bei deren temporären Entnahme aus den Transportschuhen. Insbesondere sollen die Behälter mittels der gegenüber dem Stand der Technik verbesserten Handhabungs- und/oder Behandlungsmaschine sowie mittels des verbesserten Handhabungs- bzw. Behälterbehandlungsverfahrens während ihrer Etikettierung möglichst exakt und stabil geführt sein, um den Etikettierungsvorgang störungsfrei und mit hoher Präzision durchführen zu können.

Diese Ziele der Erfindung werden mit den Gegenständen der unabhängigen Ansprüche erreicht. Merkmale vorteilhafter Weiterbildungen der Erfindung finden sich in den jeweiligen abhängigen Ansprüchen.

Zur Erreichung des genannten Ziels schlägt die Erfindung neben dem weiter unten in verschiedenen Ausführungsvarianten beschriebenen Verfahren eine Behälterbehandlungsmaschine zur Handhabung und/oder Behandlung von insbesondere nicht staufähigen Behältern und/oder solchen mit unregelmäßigen und/oder nicht zylindrischen Außenkonturen mit den Merkmalen des unabhängigen Anspruchs 1 vor. Die Maschine ist in einer Weise mit Förderabschnitten bzw. mit Teil-Förderabschnitten ausgestattet, dass dort die Behälter jeweils mittels Transportschuhen transportiert und/oder gehandhabt werden, in welchen Teilabschnitte der jeweiligen Behälter stehend und zumindest annähernd formschlüssig aufgenommen sind. Derartige Transportschuhe werden verschiedentlich auch als Pucks oder als Trägerelement o. dgl. bezeichnet, ohne dass im vorliegenden Zusammenhang durch die Verwendung des Begriffes "Transportschuhe" ein Unterschied zu anderen derartigen Aufnahme- oder Trägerelementen herausgestellt werden soll. Im Allgemeinen dienen derartige Transportschuhe der besseren Handhabbarkeit von Behältern, die etwa aufgrund ihrer geringen Größe, ihrer besonderen Formgebung, ihrer dünnwandigen und/oder nicht stabilen Außenkonturen oder auch aufgrund einer fehlenden stabilen Bodenfläche nicht in gewünschter Weise transportiert werden können, insbesondere in einem Massenstrom auf üblichen Horizontalfördereinrichtungen, so dass sie deshalb dort auch nicht staufähig sind. Dies gilt auch hier, so dass die erfindungsgemäße Behälterbehandlungsmaschine für einen Transport und eine Behandlung insbesondere einer Vielzahl von Behältern ausgelegt und ausgestattet ist, die in solchen Transportschuhen befördert werden.

Solche Transportschuhe, Pucks oder Trägerelemente weisen den Vorteil auf, dass aufgrund ihrer bekannten Außenabmessungen keinerlei Umrüstungsmaßnahmen an den verwendeten Handhabungs-, Förder- und/oder Behandlungsmaschinen erforderlich sind, wenn etwa nach einem Produktwechsel andere Behältergrößen verarbeitet werden müssen. Da auch bei unterschiedlichen Aufnahmeöffnungen für die unterschiedlich geformten und/oder dimensionierten Behälter die Außenabmessungen normalerweise unverändert bleiben, können die unterschiedlichsten Behälter mit jeweils dafür angepassten Transportschuhen in den jeweils unverändert bleibenden Maschinen verarbeitet werden. Normalerweise werden die Transportschuhe, Pucks oder Trägerelemente in gleicher Weise wie normal handhabbare Behälter befördert, d.h. an ihren Mantelfläche und/oder ihrer Unterseite gegriffen und zwischen den verschiedenen Stationen einer Behälterbehandlungsmaschine befördert und übergeben. Grundsätzlich kommen auch Transportschuhe in Frage, die fest mit der Maschine verbunden sind und bspw. in Form einer Förderkette die Maschine durchlaufen; solche Arten von Transportschuhen bzw. Trägerelementen sind jedoch nicht Bestandteil der erfindungsgemäß definierten Behälterbehandlungsmaschine, da ein besonderes Kennzeichen dieser Maschine gerade die gemeinsame und in räumlich definierter Zuordnung bleibende Handhabung der Transportschuhe mit den vorübergehend aus ihnen entnommenen Behältern während der Behandlung bzw. Etikettierung der Behälter in wenigstens einer der Behandlungsstationen der Maschine sein soll.

Die Behälterbehandlungsmaschine weist wenigstens eine um eine im Wesentlichen vertikale Maschinenachse rotierende Transportvorrichtung zur temporären Aufnahme und Fixierung der aus ihren Transportschuhen herausgenommenen Behälter im Bereich einer ersten Transportebene zum Zwecke ihrer Behandlung auf. Die Behälter werden somit getrennt von den Transportschuhen in exakt definierten Positionen gehalten und für den Etikettierungsvorgang bereitgehalten. Hierbei sind die Behälter von den Transportschuhen getrennt, werden jedoch stabil und exakt geführt, insbesondere durch flächiges Aufsetzen der Behälter auf hierfür entsprechend vorbereitete Unterlagen, die bspw. durch drehbare Transportteller gebildet sein können, sowie durch eine Haltevorrichtung an oberen Bereichen der Behälter, die bspw. durch Aufnahmetulpen o. dgl. Halte- und/oder Fixierungsvorrichtungen für die temporär aus den Transportschuhen entnommenen Behälter gebildet sein können. Dabei ist zusätzlich vorgesehen, dass die einzelnen Transportschuhe in einer räumlich ihren jeweiligen Behältern zugeordneten Position innerhalb einer unterhalb der ersten Transportebene befindlichen und parallel zu dieser angeordneten zweiten Transportebene in der rotierenden Transportvorrichtung gehalten sind. D.h., die Transportvorrichtung ist in einer Weise ausgestattet, dass die Behälter von ihren jeweiligen Transportschuhen separiert sind und ohne diese Transportschuhe gehalten sind, während die jeweiligen Transportschuhe weiterhin in räumlich engem Kontakt mit den ihnen zugeordneten Behältern bleiben. Dies wird dadurch erreicht, dass die Transportschuhe in einer zweiten Transportebene befördert und in der Transportvorrichtung gehalten sind, die sich nahe der ersten Transportebene befindet, die durch die Positionierung und Fixierung der Behälter definiert ist. Die beiden Transportebenen sind insbesondere parallel zueinander und senkrecht zur Drehachse der Transportvorrichtung angeordnet. In der im vorliegenden Zusammenhang gewählten räumlichen Anordnung befindet sich die erste Transportebene sinnvollerweise oberhalb der zweiten Transportebene, da die Transportschuhe üblicherweise einen unteren Bereich der Behälter aufnehmen und demzufolge nach unten in die zweite Transportebene verbracht werden, wenn sie von den Behältern separiert werden.

Wenn in diesem Zusammenhang von zwei parallelen und übereinander befindlichen Transportebenen für die aus den Transportschuhen entnommenen Behälter und für die zumindest vorübergehend von den Behältern separierten Transportschuhe, die getrennt von den Behältern durch die Maschine transportiert werden, die Rede ist, so ist damit noch nicht deren absolute Lage bzw. deren tatsächliches Höhenniveau definiert. So können die Behälter einerseits in ihren ursprünglichen Höhenniveaus transportiert werden, während die Transportschuhe in die zweite Transportebene befördert werden, die sich unterhalb der ersten Transportebene befindet, auf der die Behälter während ihres Etikettierungsvorganges transportiert werden. Wahlweise können die Behälter auch nach oben aus den Transportschuhen herausgehoben und beim Etikettieren in einer gegenüber ihren ursprünglichen Transportniveaus erhöhten Lage transportiert werden, so dass die erste Transportebene sich wiederum oberhalb der zweiten Transportebene für die Transportschuhe befindet, dass aber diese zweite Transportebene während der von den Behältern getrennten Beförderung der Transportschuhe in unveränderter Höhe verbleibt. Darüber hinaus sind auch Varianten möglich, bei denen die Behälter für die vorübergehende Trennung von den Transportschuhen angehoben werden, während gleichzeitig die Transportschuhe nach unten abgesenkt werden, so dass zwar die beiden Transportebenen weiterhin übereinander und parallel zueinander angeordnet sind, dass sich aber die erste Transportebene oberhalb eines ursprünglichen Förderniveaus der Behälter befindet, während sich die zweite Transportebene unterhalb eines ursprünglichen Förderniveaus der Transportschuhe befindet.

Das anschließende Zusammenfügen der Behälter und ihrer zugehörigen Transportschuhe nach erfolgter Etikettierung, was auch als "Einschuhen" bezeichnet werden kann, kann in umgekehrter Folge ablaufen, wobei sich jedoch die Förderniveaus für die Behälter und/oder für die Transportschuhe wahlweise nochmals verändern können. So kann etwa vorgesehen sein, dass die Behälter zwar zunächst nach oben aus den Transportschuhen herausgehoben und in erhöhtem Niveau der ersten Transportebene befördert und etikettiert werden, dass aber beim Einschuhen die Transportschuhe von unten zu den Behältern geführt und dabei auf das Höhenniveau der ersten Transportebene angehoben werden. Alternativ hierzu kann auch vorgesehen sein, dass die Transportschuhe zwar zunächst nach unten von den zu etikettierenden Behältern abgezogen und in abgesenktem Niveau der zweiten Transportebene befördert werden, während die Behälter in der darüber befindlichen ersten Transportebene etikettiert werden, dass aber beim Einschuhen die Behälter von oben zu den Transportschuhen geführt und dabei auf das Höhenniveau der zweiten Transportebene abgesenkt werden.

Auch Mischformen sind möglich, so dass sowohl die Behälter abgesenkt als auch die Transportschuhe angehoben werden. Das Transportniveau der in den Transportschuhen weiterbeförderten Behälter muss nach dem Etikettieren nicht dasselbe sein wie vor dem Etikettieren und dem Trennen der Behälter von den Transportschuhen.

Die erfindungsgemäße Behälterbehandlungsmaschine ist in einer Weise ausgestattet, dass der rotierenden Transportvorrichtung in Transportrichtung der Behälter ein Zuführbereich zum Zuführen der in den jeweiligen Transportschuhen befindlichen Behälter vorgeordnet ist, wobei dieser Zuführbereich eine Trenneinrichtung zum Herausziehen der Behälter aus den jeweiligen Transportschuhen bzw. zum Trennen der beiden Teile und zur separaten Übergabe der Behälter sowie der Transportschuhe an die rotierende Transporteinrichtung umfasst. Dieser der Transportvorrichtung räumlich bzw. in Transportrichtung der Behälter mitsamt den Transportschuhen vorgeordnete Zuführbereich umfasst somit eine Trenneinrichtung, die im Bereich eines rotierenden Einlaufsterns angeordnet ist, der tangential mit der als Etikettierkarussell ausgebildeten rotierenden Transportvorrichtung kämmt, und zwar in passender Drehzahl und mit teilungsgerecht über seinen Umfang verteilten Aufnahmen für die Transportschuhe und die Behälter. So kann die Trenneinrichtung bspw. ein erstes Schienensystem zum Absenken der Transportschuhe und zu deren Überleitung auf das Niveau der zweiten Transportebene umfassen. Mittels eines solchen Schienensystems können die Transportschuhe oder sog. Pucks ausgespurt und von den Behältern getrennt werden, ohne dass etwa stufenartige Übergänge o. dgl. vorhanden sind, was ein weiches Ausspuren der Behälter garantieren kann. Während die Behälter der Transportvorrichtung zugeführt werden, werden gleichzeitig die Transportschuhe bzw. Pucks in die untere Ebene bzw. die zweite Transportebene gefahren, wo sie während der Behandlung bzw. Etikettierung der Behälter verbleiben, bis sie wieder mit diesen vereinigt werden.

Weiterhin kann die erfindungsgemäße Behälterbehandlungsmaschine vorsehen, dass der rotierenden Transportvorrichtung in Transportrichtung der Behälter ein Abführbereich zum Abführen und Weiterleiten der Behälter sowie der jeweils zugehörigen Transportschuhe an weitere Transport- und/oder Handhabungsstationen nachgeordnet ist. Dieser Abführbereich kann in vorteilhafter Ausgestaltung insbesondere eine Zusammenführeinrichtung zum Hineinschieben der Behälter in die jeweiligen Transportschuhe und zum gemeinsamen Weitertransport der in den Transportschuhen befindlichen Behälter umfassen, so dass die Behälter wieder mit den sie bereits zuvor aufnehmenden Transportschuhen vereinigt und in dieser Konfiguration weiter durch die Behälterbehandlungsmaschine befördert werden können. Die erwähnte Zusammenführeinrichtung kann insbesondere im Bereich eines rotierenden Auslaufsterns angeordnet sein, der tangential mit der als Etikettierkarussell ausgebildeten rotierenden Transportvorrichtung kämmt, und zwar wiederum in passender Drehzahl und mit teilungsgerecht über seinen Umfang verteilten Aufnahmen für die Transportschuhe und die Behälter. Auch die Zusammenführeinrichtung kann ein separates Schienensystem umfassen, das hier insbesondere als zweites Schienensystem bezeichnet werden soll. Dieses zweite Schienensystem dient dem Führen und Anheben der Transportschuhe im Bereich des rotierenden Auslaufsterns auf das Niveau der ersten Transportebene, so dass die Transportschuhe wieder mit den jeweiligen Behältern vereinigt werden, die nunmehr die Behandlung durchlaufen haben, bspw. indem sie etikettiert wurden.

Wenn im vorliegenden Zusammenhang von einem Schienensystem zum Trennen der Behälter von den Transportschuhen sowie von einem weiteren Schienensystem zum Zusammenführen der Behälter und der Transportschuhe die Rede ist, so ist dies nicht einschränkend zu verstehen. So können die Trenn- und/oder Zusammenführeinrichtungen wahlweise auch durch andere Mechanismen gebildet sein, die bspw. hydraulische oder pneumatische Stellzylinder, Servomotoren, mechanische Hebel o. dgl. zum Anheben der Behälter und/oder zum Absenken der Transportschuhe umfassen können.

Wahlweise kann die Trenneinrichtung gemeinsam mit der Zusammenführeinrichtung deaktivierbar ausgebildet sein, wodurch die Behälter bei ihrer Fixierung und Behandlung im Bereich der rotierenden Transportvorrichtung in den jeweiligen Transportschuhen verbleiben können. Diese insbesondere gemeinsame Deaktivierbarkeit der Trenneinrichtung und Zusammenführeinrichtung kann als vorteilhafte Option verstanden werden, wodurch Behälter, die im Puck bzw. Transportschuh verarbeitbar sind, in dieser Aufnahmevorrichtung verbleiben können. Dies kann bspw. bei relativ kleinen Etiketten der Fall sein, die in einem Bereich des Behälters aufgebracht werden, der aus dem Transportschuh bzw. Puck nach oben herausragt. Bei deaktivierter Trenneinrichtung verbleiben die Transportschuhe in der ersten Transportebene und durchlaufen mit den jeweils darin befindlichen Behältern das Etikettierkarussell bzw. die rotierende Transportvorrichtung. Da in diesem Fall die Zusammenführeinrichtung nicht benötigt wird, bleibt diese ebenfalls deaktiviert. Das Umschalten zwischen den Optionen kann mittels geeigneter Einrichtungen automatisiert erfolgen, z.B. durch schwenkbare Überschubbleche o. dgl., die im Bereich der Trenneinrichtung sowie der Zusammenführeinrichtung angeordnet sein können.

Wie bereits erwähnt, kann die rotierende Transportvorrichtung der erfindungsgemäßen Behälterbehandlungsmaschine bspw. durch ein Etikettierkarussell zum Etikettieren der jeweils von den Transportschuhen separierten Behälter gebildet sein. Hierbei werden die Behälter bei ihrer Behandlung in der ersten Transportebene in einem Außenumfangsbereich der rotierenden Transportvorrichtung separat von ihren jeweils zugehörigen Transportschuhen fixiert und etikettiert.

Die erfindungsgemäße Behälterbehandlungsmaschine kann in einer Weise ausgestattet sein, dass die Transportschuhe in einer im Wesentlichen mit einer Längserstreckungsrichtung der in der ersten Transportebene vertikal stehenden Behälter fluchtenden Position in der zweiten Transportebene in der rotierenden Transportvorrichtung jeweils unterhalb von drehbaren Auflagetellern für die Behälter temporär gehalten bzw. fixiert sind. Die Transportschuhe bzw. Pucks werden dabei fluchtend oder nahezu fluchtend zu den Behältern in ihrer zweiten Transportebene weitertransportiert und gemeinsam mit den Behältern im rotierenden Karussell befördert; jeder Puck bleibt in fluchtender Anordnung unterhalb der Transportebene der Behälter seinem jeweiligen Behälter zugeordnet und ist von diesem beabstandet. Zur Sicherstellung einer exakten räumlichen Zuordnung der Behälter zu ihren zugehörigen Transportschuhen finden somit vorzugsweise alle Bewegungen der Behälter zu ihren jeweiligen Pucks in axialer Richtung zur jeweiligen Längserstreckungsrichtung des Behälters statt, insbesondere im Zusammenhang mit dem Absenken der Pucks oder Transportschuhe und deren Anheben. Ggf. können gleichzeitig die Behälter nach oben gehoben werden, was aber in aller Regel nicht notwendig ist. Die Behälter können in ihrer ursprünglichen Ebene innerhalb der ersten Transportebene verbleiben und müssen auf ihrem Transportweg nicht angehoben werden, denn die Pucks bzw. Transportschuhe werden nach unten in die zweite Transportebene gefahren und später wieder von unten über die Behälter geschoben. Die Behälter wie auch die Pucks bleiben dabei vorzugsweise in einer Achsrichtung orientiert, die parallel zu den Drehachsen der rotierenden Transportsterne ist.

Weiterhin kann vorgesehen sein, dass die Transportschuhe in der rotierenden Transportvorrichtung im Bereich der zweiten Transportebene jeweils unterhalb von drehbaren Auflagetellern für die Behälter temporär gehalten bzw. fixiert sind. Um Platz für die Transportschuhe zu schaffen, können die Drehantriebe für die drehbaren Transportteller, auf denen die Behälter jeweils stehen, zu diesem Zweck nach innen in Richtung zur zentralen Drehachse der Transportvorrichtung versetzt und z.B. mit Riemenantrieben ausgestattet sein. Da derartige Transportteller in der Praxis häufig mit sehr kompakten elektrischen Direktantrieben ausgestattet sind, können diese mit den in die zweite Transportebene verbrachten und dort an der Transportvorrichtung mitgeführten Transportschuhen kollidieren. Um dies zu vermeiden, kann es sinnvoll sein, die elektrischen Antriebe in nach innen versetzter Anordnung einzubauen und bspw. mit Riemenantrieben auszustatten, um in bekannter Weise die Drehteller für die darauf fixierten Behälter anzutreiben.

Da allerdings auch sehr kompakte und flach bauende Servomotoren am Markt verfügbar sind, sind solche Riemenantriebe nicht zwingend notwendig. Bei Verwendung hinreichend kompakter Servomotoren können ebenso die bekannten Direktantriebe für die Auflage- bzw. Transportteller für die von den Transportschuhen getrennten Behälter verwendet werden. Da für den Antrieb der drehbaren Transportteller keine großen Stellkräfte bzw. keine großen Drehmomente erforderlich sind, können problemlos sehr kompakte, flach bauende elektrische Direktantriebe eingesetzt werden.

Dem Fachmann ist es allerdings bekannt, dass er für die drehbaren Transportteller nicht zwingend solche elektromotorischen Antriebe einsetzen muss, sondern dass hierfür bspw. auch mechanische Antriebe in Frage kommen können, die ggf. über geeignete Getriebestufen wie bspw. Zahnradgetriebe mit einem zentralen Antrieb gekoppelt sein können, um für die gewünschten Rotationen der Transportteller beim Etikettieren der Behälter sorgen zu können.

Um die Behälter jederzeit in eine gewünschte Position bringen zu können, ist es ggf. sinnvoll, die Transportteller mit einer Sensorik auszustatten, die es ermöglicht, die aktuellen Winkellagen der Transportteller und der darauf befindlichen Behälter zu erkennen. Diese Sensoren können bspw. durch Drehpositionsgeber an den jeweiligen Transporttellern gebildet sein. Derartige Drehpositionsgeber können wahlweise auch in den elektrischen Direktantrieben integriert sein, bspw. bei deren Ausgestaltung als Schrittmotoren.

Die Behälter können bei ihrer Fixierung und ihrem rotierenden Transport auf der Transportvorrichtung zusätzlich in bekannter Weise von oben gehalten sein, bspw. mit aufsetzbaren Tulpen o. dgl. Halteeinrichtungen, so dass die Behälter in Zusammenwirkung mit den jeweils separat antreibbaren und rotierbaren Transporttellern in gewünschter Weise behandelt, insbesondere etikettiert werden können.

Der besondere Vorteil der erfindungsgemäßen Behälterbehandlungsmaschine besteht in der Handhabbarkeit von nicht standfähigen und/oder nicht staufähigen Behältern. Das Ein- und Ausschuhen dieser Behälter aus den Transportschuhen erfolgt unmittelbar vor bzw. nach dem Etikettierbereich - in der Regel gebildet durch ein Etikettierkarussell -, was die gesamte Anordnung sehr platzsparend und kompakt werden lässt.

Zur Erreichung des oben genannten Ziels schlägt die Erfindung neben der in mehreren Ausführungsvarianten beschriebenen Behälterbehandlungsmaschine auch ein Verfahren gemäß dem Anspruch 7 zur Handhabung und/oder Behandlung von insbesondere nicht staufähigen Behältern und/oder solchen mit unregelmäßigen und/oder nicht zylindrischen Außenkonturen und/oder zum Zu- und/oder Abführen der Behälter zu bzw. von einer Behälterbehandlungsmaschine entsprechend einer der zuvor beschriebenen Ausführungsvarianten vor. Bei dem Verfahren werden die Behälter jeweils mittels Transportschuhen transportiert und/oder gehandhabt, in denen zumindest Teilabschnitte der jeweiligen Behälter stehend und zumindest annähernd formschlüssig aufgenommen sind, insbesondere untere Behälterteilabschnitte, so dass obere Bereiche der stehend in den Transportschuhen beförderten Behälter nach oben aus oberen Öffnungen der auch als Puck bezeichneten Transportschuhe herausragen. Die Behälter werden bei dem erfindungsgemäßen Verfahren zumindest während eines Förderabschnittes im Bereich einer innerhalb der Behälterbehandlungsmaschine rotierenden oder einen Teil der Behälterbehandlungsmaschine bildenden rotierenden Transportvorrichtung jeweils von ihren zugehörigen Transportschuhen getrennt und mittels Halteeinrichtungen an der rotierenden Transportvorrichtung positioniert, gehalten und einer Behandlung unterzogen. Während dieser Behandlung - dies kann etwa eine Etikettierung sein - bleiben die einzelnen Transportschuhe vorzugsweise räumlich denjenigen Behältern zugeordnet, die vor der durchgeführten Behandlung der Behälter in der rotierenden Transportvorrichtung darin aufgenommen waren. Anschließend, d.h. während oder nach dem Verlassen der rotierenden Transportvorrichtung, werden die Behälter wieder in die ihnen jeweils zugeordneten Transportschuhe eingefügt. Das Verfahren sieht weiterhin eine temporäre Fixierung der von den Behältern getrennten Transportschuhe in der rotierenden Transportvorrichtung in einer zu einer ersten Transportebene der Behälter parallelen zweiten Transportebene vor. Dagegen werden die Behälter bei ihrer Behandlung in der ersten Transportebene in einem Außenumfangsbereich der rotierenden Transportvorrichtung separat von ihren jeweils zugehörigen Transportschuhen fixiert und behandelt, was bspw. deren Etikettierung, d.h. ihre Ausstattung mit mindestens einem selbstklebenden oder mittels Leimauftrags an eine Außenmantelfläche des Behälters aufgebrachten Etiketts meint.

Bei dem Verfahren befindet sich die erste Transportebene oberhalb der zweiten Transportebene und in etwa parallel zu dieser, wobei beide Transportebenen jeweils in etwa senkrecht zu einer Drehachse der rotierenden Transportvorrichtung angeordnet bzw. orientiert sind. Sofern es sich bei der erwähnten Behälterbehandlung um deren Etikettierung handelt, kann die rotierende Transportvorrichtung auch als Etikettierkarussell bezeichnet werden.

Das erfindungsgemäße Verfahren sieht weiterhin vor, dass die Behälter im Bereich eines rotierenden Einlaufsterns, der tangential mit der als Etikettierkarussell ausgebildeten rotierenden Transportvorrichtung kämmt bzw. in kämmendem Eingriff steht, von ihren jeweils zugehörigen Transportschuhen getrennt werden. Diese Trennung kann auch als Ausspuren der Behälter bzw. als Ausspuren der Transportschuhe bezeichnet werden. Das Verfahren sieht insbesondere vor, dass die Behälter von ihren jeweils zugehörigen Transportschuhen mittels eines ersten Schienensystems getrennt werden, das die Transportschuhe zwangsweise umlenkt und auf das Niveau der zweiten Transportebene führt und absenkt. Durch das Ausspuren der Pucks mittels eines solchen Schienensystems, das keine stufenartigen Übergänge aufweist, kann ein besonders schonendes und weiches Ausspuren gewährleistet werden; die Pucks werden in die untere Ebene bzw. in die zweite Transportebene gefahren.

In diesem Zusammenhang kann das Verfahren vorsehen, dass die Transportschuhe bzw. Pucks in einer im Wesentlichen mit einer Längserstreckungsrichtung der in der ersten Transportebene vertikal stehenden Behälter fluchtenden Position in der zweiten Transportebene in der rotierenden Transportvorrichtung befördert werden. Indem die Pucks fluchtend zu den Behältern weitertransportiert und im Karussell befördert werden, wobei jeder Puck in fluchtender Anordnung unterhalb der Transportebene der Behälter seinem jeweiligen Behälter zugeordnet und von diesem beabstandet bleibt, ist eine sehr exakte Bewegungsführung der vorübergehend voneinander getrennten Teile ermöglicht, was auch das zielgenaue spätere Zusammenführen erleichtert, ohne dass gesonderte Maßnahmen zur exakten Zuordnung der Behälter zu ihren wieder herangeführten Transportschuhen bzw. Pucks erforderlich sind.

Bei einer weiteren Variante des erfindungsgemäßen Verfahrens werden die Behälter im Bereich eines rotierenden Auslaufsterns, der tangential mit der als Etikettierkarussell ausgebildeten rotierenden Transportvorrichtung kämmt, wieder in die ihnen jeweils zugehörigen Transportschuhe eingesetzt, was auch als zielgenaues Einspuren der Behälter bzw. als Einspuren der Transportschuhe bezeichnet werden kann. Hierbei können die Behälter insbesondere mittels eines zweiten Schienensystems mit ihren jeweils zugehörigen Transportschuhen zusammengeführt werden, das die Transportschuhe im Bereich des rotierenden Auslaufsterns wieder auf das Niveau der ersten Transportebene führt und dabei anhebt.

Vorzugsweise finden alle Bewegungen der Behälter zu ihren jeweiligen Pucks bzw. Transportschuhen in axialer Richtung zur jeweiligen Längserstreckungsrichtung des Behälters statt, insbesondere im Zusammenhang mit dem Absenken der Pucks und deren Anheben. Die Behälter bleiben dabei sinnvollerweise in ihrer ursprünglichen Ebene und müssen nicht angehoben werden, denn die Pucks werden nach unten gefahren und später wieder von unten über die Behälter geschoben. Die Behälter wie auch die Pucks bleiben in einer Achsrichtung orientiert, die parallel zu den Drehachsen der rotierenden Transportsterne ist.

Bei dem Verfahren ist vorzugsweise vorgesehen, dass die Transportschuhe in der rotierenden Transportvorrichtung im Bereich der zweiten Transportebene jeweils unterhalb von drehbaren Auflagetellern für die Behälter temporär gehalten bzw. fixiert werden, so dass sie mit dem Etikettierkarussell rotierend befördert werden. Um Platz für die Transportschuhe zu schaffen, können ggf. vorhandene elektrische Drehantriebe für die drehbaren Transportteller, auf denen die Behälter während ihres Etikettierens stehen, zu diesem Zweck nach innen versetzt und z.B. mit Riemenantrieben ausgestattet werden.

Als Option kann weiterhin vorgesehen sein, dass Behälter, die im Puck bzw. im Transportschuh verarbeitbar bzw. etikettierbar sind, im Transportschuh verbleiben können. Dieser bleibt dann in der ersten Transportebene und durchläuft mit dem darin befindlichen Behälter das Etikettierkarussell. Ein Umschalten zwischen den Optionen kann bspw. durch geeignet steuerbare und/oder bewegbare Überschubbleche erfolgen, das bei Bedarf das Trennen und das Wiederzusammenführen der Behälter und der Transportschuhe außer Kraft setzt.

Es sei an dieser Stelle ausdrücklich erwähnt, dass alle Aspekte und Ausführungsvarianten, die im Zusammenhang mit der erfindungsgemäßen Behälterbehandlungsmaschine erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Behälterbehandlungsmaschine von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Behälterbehandlungsmaschine betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Behälterbehandlungsmaschine.

Außerdem sei an dieser Stelle ausdrücklich klargestellt, dass die erfindungsgemäße Behälterbehandlungsmaschine sowie das erfindungsgemäße Verfahren generell die Behandlung von Behältern zum Gegenstand hat, womit nicht zwingend die ausführlich beschriebene Etikettierung gemeint sein muss. Ebenso kommen auch andere Behandlungsschritte für die Behälter in Frage, bei denen diese aus den Transportschuhen entnommen werden müssen. So können die allgemein als Behälterbehandlung bezeichneten Behandlungsschritte bspw. auch den Direktdruck von definierten Arealen der Behältermantelflächen umfassen, ohne dass dies oben gesondert erwähnt wurde. Wenn daher im vorliegenden Zusammenhang allgemein von einer Behälterbehandlung oder konkreter von einer Etikettierung die Rede ist, so meint dies generell immer auch das Bedrucken der Behälter mit Druckfarbe, bspw. durch Aufbringen von Bedruckungen mittels eines Direktdruckverfahrens.

Ergänzend sei weiterhin ausdrücklich klargestellt, dass es in Abweichung von den zuvor beschriebenen und in den Patentansprüchen definierten Ausführungsvarianten der erfindungsgemäßen Behälterbehandlungsmaschine (deshalb jedoch nicht erfindungsgemäß) nicht unbedingt erforderlich ist, dass die Transportschuhe jeweils in der rotierenden Transportvorrichtung bzw. im sich drehenden Etikettierkarussell in der zweiten Transportebene unterhalb der ihnen jeweils zugeordneten Behälter mittransportiert werden. Eine technische Alternative hierzu kann durch eine geeignete Puffereinrichtung gebildet sein, die zur temporären Aufnahme der von den Behältern befreiten Transportschuhe vorbereitet und ausgestattet ist, so dass die Transportschuhe dort aufbewahrt werden, bis sie wieder mit den Behältern zusammengeführt werden. In diesem Fall ist es in Abweichung von den oben beschriebenen Ausführungsvarianten normalerweise nicht zu gewährleisten, dass die Behälter wieder in diejenigen Transportschuhe eingefügt werden, in denen sie zuvor befördert wurden, da dies aufgrund der identischen Behälter in der Praxis weder notwendig noch sinnvoll zu bewerkstelligen ist.

Der Vollständigkeit halber sei weiterhin darauf hingewiesen, dass mit dem Verfahren sowie mit der zuvor beschriebenen Maschine auch Behälter etikettiert werden können, die ohne Transportschuhe durch die Maschine befördert werden. D.h., die Maschine ist in der Lage, auch solche Behälter zu behandeln und/oder zu etikettieren, so dass je nach Behältergröße und/oder Behälterform ggf. auf solche Transportschuhe verzichtet werden kann.

Sollen unterschiedliche Behältergrößen mit jeweils denselben Transportschuhen bzw. mit jeweils gleich dimensionierten Transportschuhen durch die erfindungsgemäße Maschine gehandhabt werden, kann es ggf. sinnvoll sein, im Aufnahmebereich der Transportschuhe mit variablen und auswechselbaren Distanzstücken zu arbeiten und diese dort je nach Bedarf einzulegen, so dass die Behälterniveaus der in den Transportschuhen beförderten Behälter annähernd konstant gehalten werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einem schematischen Blockdiagramm mehrere aufeinander folgende Verfahrensschritte, die charakteristisch sind für die Durchführung einer Ausführungsvariante des erfindungsgemäßen Verfahrens.
Fig. 2 zeigt eine schematische Perspektivansicht eines Teilausschnittes einer Ausführungsvariante einer erfindungsgemäßen Behälterbehandlungsmaschine.
Fig. 3 zeigt eine weitere Darstellung des Teilausschnitts gemäß Fig. 2, jedoch mit gegenüber der Fig. 2 leicht veränderter Perspektive.
Fig. 4 zeigt eine weitere Darstellung des Teilausschnitts gemäß Fig. 2 und Fig. 3, jedoch mit gegenüber den Figuren 2 und 3 leicht veränderter Perspektive.

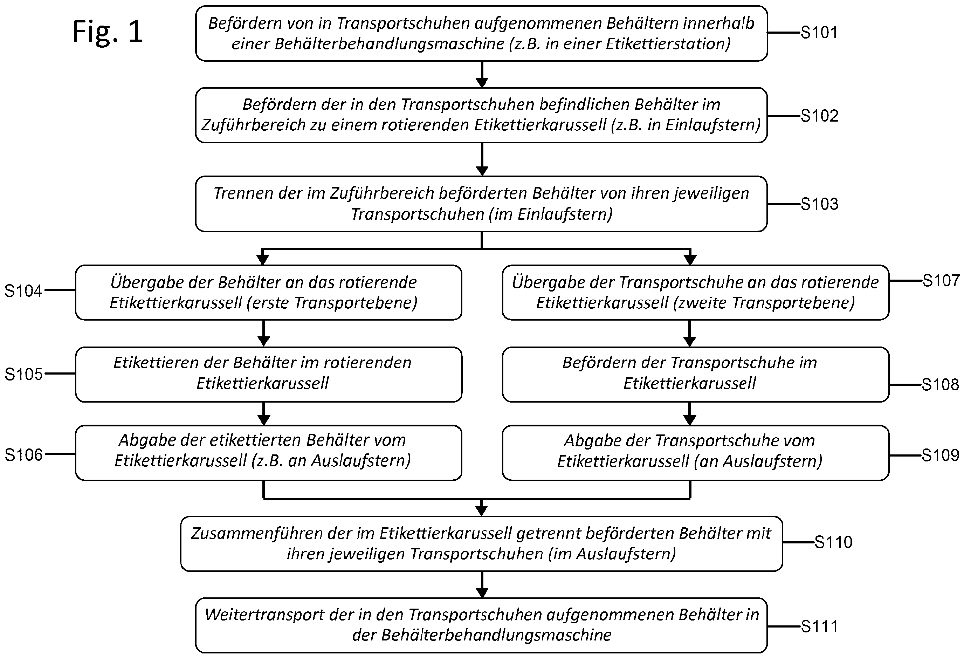

Für gleiche oder gleich wirkende Elemente der Erfindung verwenden die Figuren 1 bis 4 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Behälterbehandlungsmaschine oder das erfindungsgemäße Verfahren ausgestaltet sein können und stellen keine abschließende Begrenzung dar. Es sei daher an dieser Stelle betont, dass die anhand der Figuren relativ konkret und gegenständlich beschriebenen Ausführungsbeispiele den in den Ansprüchen niedergelegten und im allgemeinen Teil der Beschreibung in den unterschiedlichsten Ausführungsvarianten definierten abstrakten Erfindungsgedanken in keiner Weise schmälern oder einschränken sollen.

Das schematische Blockdiagramm der Fig. 1 veranschaulicht für die Durchführung einer Ausführungsvariante des erfindungsgemäßen Verfahrens charakteristische Verfahrensschritte. Bei dem Verfahren, das insbesondere der Handhabung und/oder Behandlung von bspw. nicht staufähigen Behältern und/oder solchen mit unregelmäßigen und/oder nicht zylindrischen Außenkonturen dienen kann, werden Behälter innerhalb einer Behälterbehandlungsmaschine befördert (S101), etwa um sie dort zu etikettieren. Bei dem Verfahren sind die Behälter jeweils in separaten Transportschuhen aufgenommen und werden mittels dieser Transportschuhe transportiert und/oder gehandhabt, um bspw. innerhalb der Behälterbehandlungsmaschine einer Etikettierstation zugeführt zu werden. In den Transportschuhen sind zumindest Teilabschnitte der jeweiligen Behälter stehend und zumindest annähernd formschlüssig aufgenommen, insbesondere untere Teilabschnitte, so dass obere Bereiche der stehend in den Transportschuhen beförderten Behälter nach oben aus oberen Öffnungen der auch als Puck bezeichneten Transportschuhe herausragen. Im Laufe ihres Transports durch die Behälterbehandlungsmaschine werden die in den Transportschuhen befindlichen Behälter im Zuführbereich zu einer Behandlungsstation befördert (S102), die bspw. durch ein rotierendes Etikettierkarussell gebildet sein kann. Der Zuführbereich kann insbesondere durch einen rotierenden Einlaufstern gebildet sein, der die Behälter dem Etikettierkarussell übergibt.

Die Behälter werden innerhalb des Zuführbereichs zum Etikettierkarussell jeweils von ihren zugehörigen Transportschuhen getrennt (S103), was typischerweise im Bereich des Einlaufsterns erfolgen kann, und werden anschließend an das rotierende Etikettierkarussell übergeben (S104), wo wie mittels geeigneter Halteeinrichtungen positioniert, gehalten und einer Behandlung unterzogen werden können, bspw. indem sie dort während eines Teilabschnittes eines Umlaufs des rotierenden Karussells etikettiert werden. Gleichzeitig erfolgt auch die Übergabe der von den Behältern getrennten Transportschuhe an das Etikettierkarussell (S107), wobei während der Behälterbehandlung bzw. Etikettierung die einzelnen Transportschuhe vorzugsweise räumlich denjenigen Behältern zugeordnet bleiben, die vor der durchgeführten Behandlung der Behälter in der rotierenden Transportvorrichtung darin aufgenommen waren. Dies kann bspw. durch eine fluchtende Ausrichtung der Transportschuhe in Positionierungen unterhalb der jeweiligen Behälter erfolgen, so dass die Behälter in einer ersten Transportebene im Etikettierkarussell fixiert sind, während die zugehörigen Transportschuhe in einer darunter befindlichen zweiten Transportebene fixiert und transportiert werden (S108).

Anschließend, d.h. nach erfolgter Etikettierung der Behälter (S105), verlassen diese das Etikettierkarussell und werden bspw. an einen Auslaufstern abgegeben (S106). Gleiches erfolgt mit den Transportschuhen, die ebenfalls an den Auslaufstern abgegeben werden (S109). Während des Transports oder nach dem Transport im Auslaufstern werden die Behälter wieder in die ihnen jeweils zugeordneten Transportschuhe eingefügt, was in Fig. 1 als Zusammenführen der Behälter mit ihren jeweiligen Transportschuhen (S110) bezeichnet wird. Der Weitertransport der Behälter innerhalb der Behälterbehandlungsmaschine (S111) erfolgt wieder in der ursprünglichen Weise, d.h. mit Behältern, die jeweils in den Transportschuhen aufgenommen sind.

Wenn in diesem Zusammenhang von zwei parallelen und übereinander befindlichen Transportebenen für die aus den Transportschuhen entnommenen Behälter und für die zumindest vorübergehend von den Behältern separierten Transportschuhe, die getrennt von den Behältern durch die Maschine transportiert werden, die Rede ist, so ist damit noch nicht deren absolute Lage bzw. deren tatsächliches Höhenniveau definiert. So können die Behälter einerseits in ihren ursprünglichen Höhenniveaus transportiert werden, während die Transportschuhe in die zweite Transportebene befördert werden, die sich unterhalb der ersten Transportebene befindet, auf der die Behälter während ihres Etikettierungsvorganges transportiert werden. Wahlweise können die Behälter auch nach oben aus den Transportschuhen herausgehoben und beim Etikettieren in einer gegenüber ihren ursprünglichen Transportniveaus erhöhten Lage transportiert werden, so dass die erste Transportebene sich wiederum oberhalb der zweiten Transportebene für die Transportschuhe befindet, dass aber diese zweite Transportebene während der von den Behältern getrennten Beförderung der Transportschuhe in unveränderter Höhe verbleibt. Darüber hinaus sind auch Varianten möglich, bei denen die Behälter für die vorübergehende Trennung von den Transportschuhen angehoben werden, während gleichzeitig die Transportschuhe nach unten abgesenkt werden, so dass zwar die beiden Transportebenen weiterhin übereinander und parallel zueinander angeordnet sind, dass sich aber die erste Transportebene oberhalb eines ursprünglichen Förderniveaus der Behälter befindet, während sich die zweite Transportebene unterhalb eines ursprünglichen Förderniveaus der Transportschuhe befindet.

Das anschließende Zusammenfügen der Behälter und ihrer zugehörigen Transportschuhe nach erfolgter Etikettierung, was auch als "Einschuhen" bezeichnet werden kann, kann in umgekehrter Folge ablaufen, wobei sich jedoch die Förderniveaus für die Behälter und/oder für die Transportschuhe wahlweise nochmals verändern können. So kann etwa vorgesehen sein, dass die Behälter zwar zunächst nach oben aus den Transportschuhen herausgehoben und in erhöhtem Niveau der ersten Transportebene befördert und etikettiert werden, dass aber beim Einschuhen die Transportschuhe von unten zu den Behältern geführt und dabei auf das Höhenniveau der ersten Transportebene angehoben werden. Alternativ hierzu kann auch vorgesehen sein, dass die Transportschuhe zwar zunächst nach unten von den zu etikettierenden Behältern abgezogen und in abgesenktem Niveau der zweiten Transportebene befördert werden, während die Behälter in der darüber befindlichen ersten Transportebene etikettiert werden, dass aber beim Einschuhen die Behälter von oben zu den Transportschuhen geführt und dabei auf das Höhenniveau der zweiten Transportebene abgesenkt werden.

Auch Mischformen sind möglich, so dass sowohl die Behälter abgesenkt als auch die Transportschuhe angehoben werden. Das Transportniveau der in den Transportschuhen weiterbeförderten Behälter muss nach dem Etikettieren nicht dasselbe sein wie vor dem Etikettieren und dem Trennen der Behälter von den Transportschuhen.

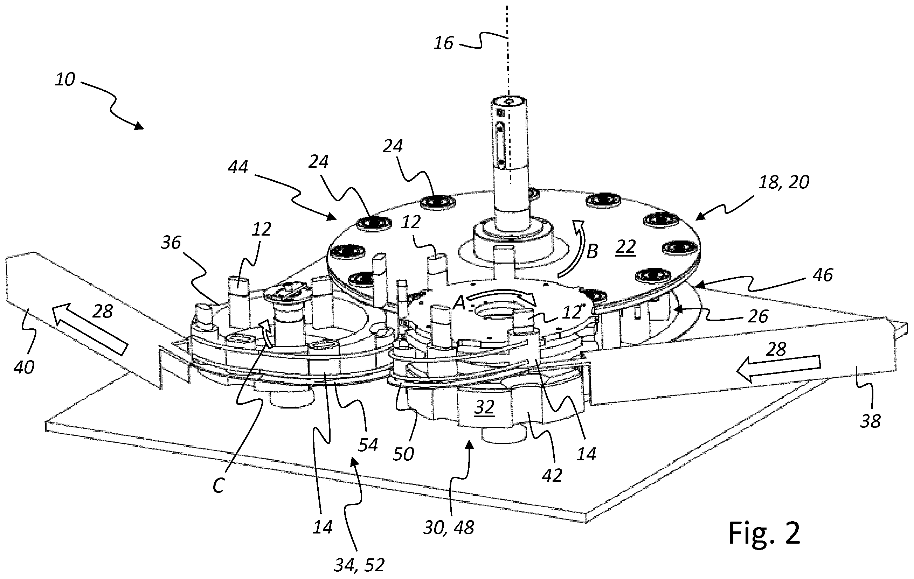

Die Figuren 2, 3 und 4 zeigen jeweils in schematischen Perspektivansichten Teilausschnitte einer Ausführungsvariante einer erfindungsgemäßen Behälterbehandlungsmaschine 10, die insbesondere der Handhabung und/oder Behandlung von nicht staufähigen Behältern 12 und/oder Behältern 12 mit unregelmäßigen und/oder nicht zylindrischen Außenkonturen dient. In den meisten Förderabschnitten der Maschine 10 werden die Behälter 12 jeweils mittels Transportschuhen 14 transportiert, in denen die Behälter 12 mit ihren unteren Teilabschnitten stehend und formschlüssig aufgenommen sind. Die gezeigte Behälterbehandlungsmaschine 10 weist eine um eine im Wesentlichen vertikale Maschinenachse 16 rotierende Transportvorrichtung 18 auf, die im gezeigten Ausführungsbeispiel durch ein sog. Etikettierkarussell 20 gebildet ist, in dem die Behälter 12 jeweils mit selbstklebenden oder aufgeleimten Etiketten ausgestattet werden. Die an geeigneten Stellen am Außenumfang der rotierenden Transportvorrichtung 18 bzw. des Etikettierkarussells angeordneten Etikettiervorrichtungen sind jedoch in den Figuren 2 bis 4 der besseren Übersichtlichkeit halber nicht dargestellt. Wie oben bereits erwähnt, können die Behälter 12 wahlweise auch bedruckt werden, bspw. mittels eines Direktdruckverfahrens, was aber hier ebenfalls nicht dargestellt ist. Wenn jedoch im vorliegenden Zusammenhang von einem Etikettierkarussell 20 gesprochen wird, so ist damit begrifflich auch eine Transportvorrichtung 18 umfasst, bei deren Umlauf die Behälter 12 bedruckt werden.

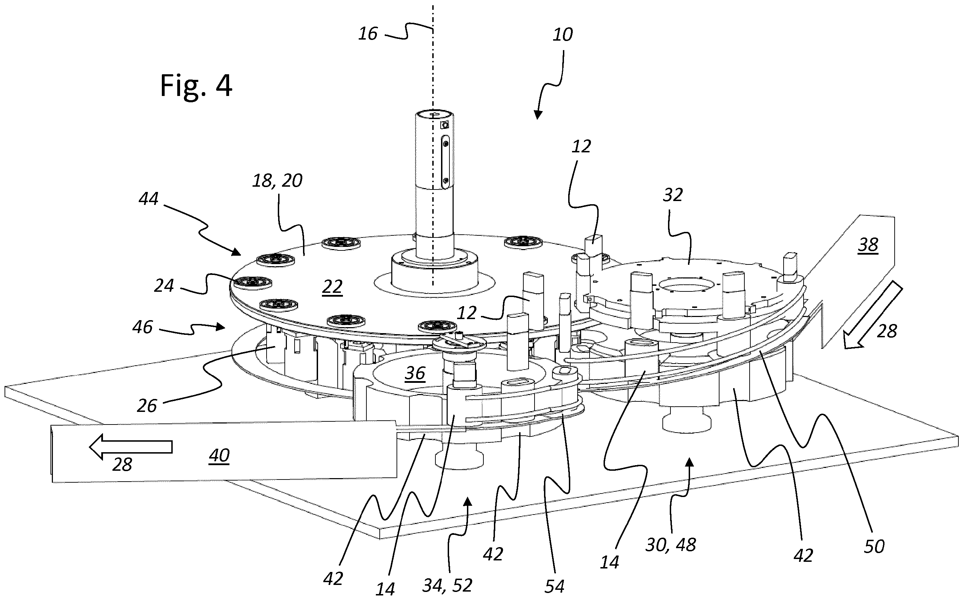

Die in den Figuren 2 bis 4 gezeigte rotierende Transportvorrichtung 18, gebildet durch das Etikettierkarussell 20, weist eine scheibenartige Gestalt auf und rotiert um die zentrale vertikale Maschinenachse 16. Auf seiner flachen Oberseite 22 weist die Transportvorrichtung 18 bzw. das Etikettierkarussell 20 mehrere Auflageteller 24 für jeweils einen Behälter 12 auf, die typischerweise jeweils drehbar ausgebildet und jeweils mit einem zugeordneten elektrischen Drehantrieb 26 (vgl. Fig. 4) ausgestattet sind. Den drehbaren Auflagetellern 24 jeweils zugeordnete obere Halteeinrichtungen, die bspw. durch Aufnahme- oder Haltetulpen o. dgl. gebildet sein können, sind in den Figuren 2 bis 4 der besseren Übersichtlichkeit halber nicht dargestellt. Außerdem sind in den Figuren 2 bis 4 die mit ihren Bodenflächen jeweils auf den Auflagetellern 24 des Etikettierkarussells 20 stehenden Behälter 12 nicht oder nur teilweise dargestellt, während sie etwa in einem Einlaufstern 32 und in einem Auslaufstern 36 schematisch angedeutet sind. Die Figuren 2 bis 4 sind allerdings jeweils so zu verstehen, dass sich die Behälter 12 oberhalb der Auflageteller 24 auf der Transportvorrichtung 18 bzw. dem Etikettierkarussell 20 befinden, während die Transportschuhe 14 jeweils unterhalb dieser Auflageteller 24 befinden und in räumlicher Nähe zu ihren jeweiligen Behältern 12 in der Transportvorrichtung 18 bzw. im Etikettierkarussell 20 mittransportiert werden.

Die Auflageteller 24 befinden sich jeweils am Randbereich der flachen Oberseite 22 der rotierenden Transportvorrichtung 18 bzw. des Etikettierkarussells 20 und sind regelmäßig voneinander beabstandet. Im gezeigten Ausführungsbeispiel umfasst die rotierende Transportvorrichtung 18 bzw. das Etikettierkarussell 20 insgesamt zwölf solcher Auflageteller 24, die gleichmäßig über den äußeren Randbereich der Transportvorrichtung 18 bzw. des Etikettierkarussells 20 verteilt sind.

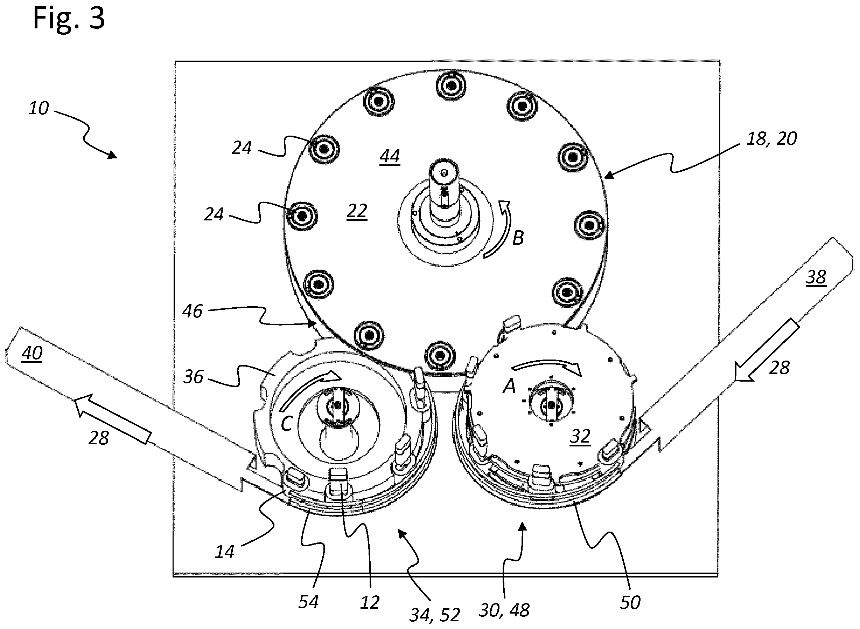

Der rotierenden Transportvorrichtung 18 bzw. dem Etikettierkarussell 20 ist in Transportrichtung 28 ein Zuführbereich 30 zum Zuführen der in den jeweiligen Transportschuhen 14 befindlichen Behälter 12 vorgeordnet, gebildet durch einen rotierenden Einlaufstern 32, der tangential mit der Transportvorrichtung 18 bzw. dem Etikettierkarussell 20 kämmt, so dass die Behälter 12 dort passgenau auf die jeweiligen Auflageteller 24 positioniert werden können. Die Drehrichtungen des rotierenden Einlaufsterns 32 und der rotierenden Transportvorrichtung 18 bzw. des Etikettierkarussells 20 sind durch die Pfeile A und B gekennzeichnet (vgl. Fig. 2). Weiterhin ist der rotierenden Transportvorrichtung 18 in Transportrichtung 28 der Behälter 12 ein Abführbereich 34 zum Abführen und Weiterleiten der Behälter 12 sowie der jeweils zugehörigen Transportschuhe 14 an weitere, hier nicht gezeigte Transport- und/oder Handhabungsstationen nachgeordnet. Der Abführbereich 34 ist durch einen in Pfeilrichtung C (Fig. 2) rotierenden und gleichfalls mit der Transportvorrichtung 18 bzw. dem Etikettierkarussell 20 kämmenden Auslaufstern 36 gebildet, der relativ nahe am Einlaufstern 32 platziert ist, so dass zwischen den jeweiligen Übergabestellen des Einlaufsterns 32 und des Auslaufsterns 36 für die Behandlung bzw. Etikettierung der Behälter 12 auf dem Etikettierkarussell 20 ein relativ großer Winkelbereich von deutlich mehr als 180 Grad zur Verfügung steht, was insbesondere in der perspektivischen Ansicht der Fig. 3 deutlich erkennbar ist.

Es sei allerdings darauf hingewiesen, dass der Zuführbereich 30 auch andere Transportmittel als den gezeigten rotierenden Einlaufstern 32 aufweisen kann, etwa mit linearer Förderrichtung, wie sie bspw. durch Zuführschnecken o. dgl. Fördermittel vorgegeben sein können. Außerdem kann auch der Abführbereich 34 mit anderen Fördermitteln ausgestattet sein als mit dem gezeigten rotierenden Auslaufstern 36, bspw. wiederum mit linearen Fördereinrichtungen. Die gezeigten Darstellungen sind daher lediglich beispielhaft und nicht einschränkend hinsichtlich der Transportmittel zu verstehen.

Der Einlaufstern 32 schließt sich an einen geradlinigen Förderabschnitt 38 an, auf dem die in den Transportschuhen 14 befindlichen Behälter 12 an den Einlaufstern 32 heranbefördert werden, bspw. in sog. Stauförderung, wonach sie im Zuführbereich 30 in die entsprechenden Aufnahmen des Einlaufsterns 32 übergeben werden, damit sie von dort passgenau und teilungsgerecht auf die Auflageteller 24 der rotierenden Transportvorrichtung 18 bzw. des Etikettierkarussells 20 zum Zwecke der gewünschten Behandlung bzw. Etikettierung übergeben werden können. Ebenso schließt sich an den Auslaufstern 36 ein gleichartiger geradliniger Förderabschnitt 40 an, auf dem die in den Transportschuhen 14 befindlichen Behälter 12 in Transportrichtung 28 an weitere Behandlungs- und/oder Förderstationen (nicht gezeigt) der Behälterbehandlungsmaschine 10 weiterbefördert werden können. Allerdings muss nicht gesondert betont werden, dass die Förderabschnitte 38 und 40 zum Einlaufstern 32 bzw. zum Auslaufstern 36 keineswegs geradlinig verlaufen müssen, sondern wahlweise auch gekrümmt sein können.

Wie es insbesondere die perspektivische Ansicht der Fig. 4 erkennen lässt, weist der zum Einlaufstern 32 führende Förderabschnitt 38 ein Gefälle in einer Größenordnung von etwa zehn Winkelgraden auf, was dazu genutzt wird, die Transportschuhe 14 im Bereich des Einlaufsterns 32 in unverändertem Gefälle nach unten abtauchen zu lassen und von den in geeigneter Weise in entsprechend ausgestatteten Aufnahmen 42 im Einlaufstern 32 fixierten und/oder geklemmten Behältern 12 zu trennen. Diese verbleiben mit Eintritt in den Einlaufstern 32 und mit ihrer Fixierung in dessen Aufnahmen 42 in unverändertem Höhenniveau des Einlaufsterns 32, was im vorliegenden Zusammenhang auch als erste Transportebene 44 für die Behälter 12 bezeichnet wird, die sich auch im Bereich der rotierenden Transportvorrichtung 18 bzw. des Etikettierkarussells 20 fortsetzt; auch dort verbleiben die Behälter 12 jeweils auf demselben Höhenniveau dieser ersten Transportebene 44.

Um die Transportschuhe 14 in eine unterhalb dieser ersten Transportebene 44 befindliche zweite Transportebene 46 zu verbringen, ist dem Zuführbereich 30 mit dem Einlaufstern 32 eine Trenneinrichtung 48 zum Herausziehen der Behälter 12 aus den jeweiligen Transportschuhen 14 und zur separaten Übergabe der Behälter 12 sowie der Transportschuhe 14 an die rotierende Transporteinrichtung 18 bzw. das Etikettierkarussell 20 zugeordnet. Die beiden Transportebenen 44 und 46 sind parallel zueinander und senkrecht zur Drehachse 16 der Transportvorrichtung 18 angeordnet.

Im gezeigten Ausführungsbeispiel ist die dem Zuführbereich 30 zugeordnete Trenneinrichtung 48 durch ein erstes Schienensystem 50 zum geführten Absenken der Transportschuhe 14 während ihres Umlaufs in den entsprechend nach unten verlängerten und im Führungsbereich für die Transportschuhe 14 ggf. vergrößerten Aufnahmen 42 des Einlaufstern 32 und zum Überleitung der Transportschuhe 14 auf das tiefer liegende Niveau der zweiten Transportebene 46 gebildet. Mittels dieses ersten Schienensystems 50 können die Transportschuhe 14 oder sog. Pucks ausgespurt und von den Behältern 12 getrennt werden, ohne dass etwa stufenartigen Übergänge o. dgl. vorhanden sind, was ein weiches Ausspuren der Behälter 12 garantieren kann. Das erste Schienensystem 50 der Trenneinrichtung 48 beschreibt somit bei gleichbleibendem Gefälle eine Kreisbogen entlang des Umfang des Einlaufsterns 32, so dass die Transportschuhe 14 in gleitender Förderung in die zweite Transportebene 46 unterhalb der flachen Oberseite 22 der Transportvorrichtung 18 bzw. des Etikettierkarussells 20 überführt und dort gemeinsam mit den jeweiligen Behältern 12, doch separiert und beabstandet von diesen, bis zum Auslaufstern 36 in exakt fixierten Positionen umlaufen können. Die Positionen der Transportschuhe 14 befinden sich dabei exakt unterhalb der jeweiligen drehbaren Auflageteller 24 für die Behälter 12. Die Behälter 12 können somit problemlos etikettiert werden, da ihre gesamten Mantelflächen der Etikettierung zugänglich gemacht sind, während ihre jeweiligen Transportschuhe 14 in einer Bereitschaftsstellung unterhalb der Transportteller 24 mitbefördert werden.

Wie oben erwähnt, ist der rotierenden Transportvorrichtung 18 in Transportrichtung 28 der Behälter 12 der mit dem Auslaufstern 36 ausgestattete Abführbereich 34 zum Abführen und Weiterleiten der Behälter 12 sowie der jeweils zugehörigen Transportschuhe 14 an hier nicht gezeigte weitere Transport- und/oder Handhabungsstationen nachgeordnet. Dieser Abführbereich 34 umfasst eine Zusammenführeinrichtung 52 zum Hineinschieben der Behälter 12 in die jeweiligen Transportschuhe 14 und zum gemeinsamen Weitertransport der wieder in ihren zugehörigen Transportschuhen 14 befindlichen Behälter 12, so dass die Behälter 12 wieder gemeinsam mit den sie aufnehmenden Transportschuhen 14 durch die Behälterbehandlungsmaschine 10 weiterbefördert werden können. Die Zusammenführeinrichtung 52 ist im Bereich des rotierenden Auslaufsterns 36 angeordnet und umfasst ein zweites Schienensystem 54, das dem Führen und Anheben der Transportschuhe 14 im Bereich des rotierenden Auslaufsterns 36 auf das Niveau der ersten Transportebene 44 dient. Die im Auslaufstern 36 in derselben Teilung wie in der Transportvorrichtung 18 und im Einlaufstern 32 angeordneten Aufnahmen 42 für die Transportschuhe 14 sowie die Behälter 12 sind vorzugsweise in gleicher Weise gestaltet wie die Aufnahmen 42 des Einlaufsterns 32, so dass die Transportschuhe 14 dort weitgehend spielfrei von der zweiten Transportebene 46 auf die erste Transportebene 44 angehoben werden können. Die Steigung des zweiten Schienensystems 54 ist demzufolge so zu wählen, dass die vom Auslaufstern 36 zwischen der Übernahme der Behälter 12 und Transportschuhe 14 von der Transportvorrichtung 18 und ihrer Übergabe an den sich anschließenden Förderabschnitt 40 zurückgelegte Drehung über einen Bogenwinkel von etwas mehr als 90 Grad (vgl. Fig. 3) ausreicht, um die Transportschuhe 14 bei ihrem Anheben mit den jeweiligen Behältern 12 zusammenzuführen.

Die Transportschuhe 14 sind mit geeigneten Führungselementen auszustatten, die mit den Schienensystemen 50 und 54 in einer Weise zusammenwirken, so dass sie weitgehend spielfrei nach unten in die zweite Transportebene 46 bzw. nach oben auf die erste Transportebene 44 geführt werden können. Diese Führungselemente sind jedoch in den schematischen Darstellungen der Figuren 2 bis 4 nicht näher gezeigt, so dass es dem angesprochenen Fachmann überlassen bleibt, hierfür geeignete Formen an den Außenmantelflächen und oder Bodenflächen der Transportschuhe 14 zu wählen und vorzusehen.

Wahlweise kann vorgesehen sein, dass sowohl die Trenneinrichtung 48 als auch die Zusammenführeinrichtung 52 bedarfsweise deaktiviert werden können, wodurch die Behälter 12 bei ihrer Fixierung und Behandlung im Bereich der rotierenden Transportvorrichtung 18 in ihren jeweiligen Transportschuhen 14 verbleiben können. Eine solche gemeinsame Deaktivierbarkeit der Trenneinrichtung 48 und Zusammenführeinrichtung 52 kann bspw. bei relativ kleinen Etiketten oder bei relativ kleinen Druckbereichen an den Behältermantelflächen sinnvoll sein, die auch bei in den Transportschuhen 14 aufgenommenen Behältern 12 noch aufgebracht werden können. Bei deaktivierter Trenneinrichtung 48 kann das erste Schienensystem 50 bspw. in einer Weise verschwenkt werden, dass es die Transportschuhe 14 nicht nach unten leitet, so dass diese in der ersten Transportebene 44 verbleiben und mit den jeweils darin befindlichen Behältern 12 das Etikettierkarussell 20 durchlaufen. In diesem Fall wird auch die Zusammenführeinrichtung 52 deaktiviert, bspw. durch Verschwenken des zweiten Schienensystems 54.

Wie es die Fig. 4 andeutungsweise erkennen lässt, sind die Transportschuhe 14 in ihrer Lage in der zweiten Transportebene 46 in der rotierenden Transportvorrichtung 18 jeweils unterhalb der drehbaren Auflageteller 24 für die Behälter 12 gehalten bzw. fixiert. Um ausreichend Platz für die Transportschuhe 14 zur Verfügung zu stellen, sind die elektrischen Drehantriebe 26 für die drehbaren Transportteller 24 zu diesem Zweck nach innen in Richtung zur zentralen Drehachse 16 der Transportvorrichtung 18 versetzt; sie können bspw. mit Riemenantrieben ausgestattet sein, die für den Antrieb der Transportteller 24 sorgen.

Da allerdings auch sehr kompakte und flach bauende Servomotoren am Markt verfügbar sind, sind solche Riemenantriebe nicht zwingend notwendig. Bei Verwendung hinreichend kompakter Servomotoren können ebenso gut Direktantriebe zum Drehen der Auflageteller 24 mit den darauf stehenden Behältern 12 verwendet werden. Da für den Antrieb der drehbaren Auflageteller 24 keine großen Drehmomente erforderlich sind, können problemlos sehr kompakte, flach bauende elektrische Direktantriebe eingesetzt werden. Dem Fachmann ist es allerdings bekannt, dass er für die drehbaren Auflageteller 24 nicht zwingend solche elektromotorischen Antriebe einsetzen muss, sondern dass hierfür bspw. auch mechanische Antriebe in Frage kommen können, die ggf. über geeignete Getriebestufen wie bspw. Zahnradgetriebe mit einem zentralen Antrieb gekoppelt sein können, um für die gewünschten Rotationen der Transportteller 24 beim Etikettieren der Behälter 12 während eines Umlaufs des Etikettierkarussells 20 sorgen zu können.

Um die Behälter 12 bei ihrer Fixierung auf den jeweiligen Auflagetellern 24 jederzeit in eine gewünschte Position bringen zu können, ist es ggf. sinnvoll, die Auflageteller 24 mit einer Sensorik auszustatten, die es erlaubt, die aktuellen Winkellagen der Auflageteller 24 und der darauf befindlichen Behälter 12 zu erkennen. Diese Sensoren können bspw. durch Drehpositionsgeber an den jeweiligen Auflagetellern 24 gebildet sein. Derartige Drehpositionsgeber können wahlweise auch in den elektrischen Direktantrieben integriert sein.

In Abweichung von den in den Figuren 1 bis 4 gezeigten und nachfolgend erläuterten Ausführungsvarianten der erfindungsgemäßen Behälterbehandlungsmaschine 10 ist es nicht unbedingt erforderlich, dass die Transportschuhe 14 im Etikettierkarussell 20 innerhalb der zweiten Transportebene 46 unterhalb der ihnen jeweils zugeordneten Behälter 12 mittransportiert werden. Eine technische Alternative hierzu kann durch eine geeignete Puffereinrichtung gebildet sein, die zur temporären Aufnahme der von den Behältern 12 befreiten Transportschuhe 14 vorbereitet ist, so dass die Transportschuhe 14 dort aufbewahrt werden, bis sie wieder mit den Behältern 12 zusammengeführt werden. In diesem Fall ist es in Abweichung von den oben beschriebenen Ausführungsvarianten normalerweise nicht zu gewährleisten, dass die Behälter 12 wieder in diejenigen Transportschuhe 14 eingefügt werden, in denen sie zuvor befördert wurden, da dies aufgrund der identischen Behälter 12 in der Praxis weder notwendig noch sinnvoll zu bewerkstelligen ist.

### Bezugszeichenliste

- 10: Maschine, Behandlungsmaschine, Behälterbehandlungsmaschine
- 12: Behälter
- 14: Transportschuh, Puck, Schuh
- 16: Maschinenachse, vertikale Maschinenachse
- 18: Transportvorrichtung, rotierende Transportvorrichtung
- 20: Etikettierkarussell
- 22: Oberseite, flache Oberseite
- 24: Auflageteller, drehbarer Auflageteller, Transportteller
- 26: Drehantrieb, elektrischer Drehantrieb
- 28: Transportrichtung
- 30: Zuführbereich
- 32: Einlaufstern
- 34: Abführbereich
- 36: Auslaufstern
- 38: Förderabschnitt, geradliniger Förderabschnitt
- 40: Förderabschnitt, geradliniger Förderabschnitt
- 42: Aufnahme
- 44: erste Transportebene, erstes Transportniveau
- 46: zweite Transportebene, zweites Transportniveau
- 48: Trenneinrichtung
- 50: erstes Schienensystem
- 52: Zusammenführeinrichtung
- 54: zweites Schienensystem

- A: Drehrichtung des Einlaufsterns
- B: Drehrichtung des Etikettierkarussells
- C: Drehrichtung des Auslaufsterns

## Patentansprüche

1. Behälterbehandlungsmaschine (10) zur Handhabung und/oder Behandlung von insbesondere nicht staufähigen Behältern (12) und/oder solchen mit unregelmäßigen und/oder nicht zylindrischen Außenkonturen, wobei die Behälter (12) innerhalb von Teil-Förderabschnitten der Behälterbehandlungsmaschine (10) jeweils mittels Transportschuhen (14) transportiert und/oder gehandhabt werden, in welchen Teilabschnitte der jeweiligen Behälter (12) stehend und annähernd formschlüssig aufgenommen sind, wobei die Behälterbehandlungsmaschine (10) wenigstens eine um eine im Wesentlichen vertikale Maschinenachse (16) rotierende Transportvorrichtung (18) zur temporären Aufnahme und Fixierung der aus ihren Transportschuhen (14) herausgenommenen Behälter (12) im Bereich einer ersten Transportebene (44) zum Zwecke ihrer Behandlung aufweist, wobei die einzelnen Transportschuhe (14) in einer räumlich ihren jeweiligen Behältern (12) zugeordneten Position innerhalb einer unterhalb der ersten Transportebene (44) befindlichen und parallel zu dieser angeordneten zweiten Transportebene (46) in der rotierenden Transportvorrichtung (18) gehalten sind, **dadurch gekennzeichnet, dass** der rotierenden Transportvorrichtung (18) in Transportrichtung (28) der Behälter (12) ein Zuführbereich (30) zum Zuführen der Behälter (12) sowie der jeweils zugehörigen Transportschuhe (14) vorgeordnet ist, wobei der Zuführbereich (30) eine Trenneinrichtung (48) zum Herausziehen der Behälter (12) aus den jeweiligen Transportschuhen (14) und zur separaten Übergabe der Behälter (12) sowie der Transportschuhe (14) an die rotierende Transporteinrichtung (18) umfasst,
wobei die Trenneinrichtung (48) im Bereich eines rotierenden Einlaufsterns (32), der tangential mit der als Etikettierkarussell (20) ausgebildeten rotierenden Transportvorrichtung (18) kämmt, angeordnet ist,
und wobei die Trenneinrichtung (48) insbesondere ein erstes Schienensystem (50) zum Absenken der Transportschuhe (14) und zu deren Überleitung auf das Niveau der zweiten Transportebene (46) umfasst.

2. Behälterbehandlungsmaschine nach Anspruch 1, bei welcher der rotierenden Transportvorrichtung (18) in Transportrichtung (28) der Behälter (12) ein Abführbereich (34) zum Abführen und Weiterleiten der Behälter (12) sowie der jeweils zugehörigen Transportschuhe (14) an weitere Transport- und/oder Handhabungsstationen nachgeordnet ist, wobei der Abführbereich (34) eine Zusammenführeinrichtung (52) zum Hineinschieben der Behälter (12) in die jeweiligen Transportschuhe (14) und zum gemeinsamen Weitertransport der in den Transportschuhen (14) befindlichen Behälter (12) umfasst.

3. Behälterbehandlungsmaschine nach Anspruch 2, bei der die Zusammenführeinrichtung (52) im Bereich eines rotierenden Auslaufsterns (36), der tangential mit der als Etikettierkarussell (20) ausgebildeten rotierenden Transportvorrichtung (18) kämmt, angeordnet ist.

4. Behälterbehandlungsmaschine nach Anspruch 3, bei der die Zusammenführeinrichtung (52) ein zweites Schienensystem (54) zum Führen und Anheben der Transportschuhe (14) im Bereich des rotierenden Auslaufsterns (36) auf das Niveau der ersten Transportebene (44) umfasst.

5. Behälterbehandlungsmaschine nach einem der Ansprüche 2 bis 4, bei der die Trenneinrichtung (48) gemeinsam mit der Zusammenführeinrichtung (52) deaktivierbar ist, wodurch die Behälter (12) bei ihrer Fixierung und Behandlung im Bereich der rotierenden Transportvorrichtung (18) in den jeweiligen Transportschuhen (14) verbleiben.

6. Behälterbehandlungsmaschine nach einem der Ansprüche 1 bis 5, bei der die rotierende Transportvorrichtung (18) durch ein Etikettierkarussell (20) zum Etikettieren der jeweils von den Transportschuhen (14) separierten Behälter (12) gebildet ist.

7. Verfahren zur Handhabung und/oder Behandlung von insbesondere nicht staufähigen Behältern (12) und/oder solchen mit unregelmäßigen und/oder nicht zylindrischen Außenkonturen und/oder zum Zu- und/oder Abführen der Behälter (12) zu bzw. von einer Behälterbehandlungsmaschine (10), welche Behälter (12) jeweils mittels Transportschuhen (14) transportiert und/oder gehandhabt werden, in denen Teilabschnitte der jeweiligen Behälter (12) stehend und annähernd formschlüssig aufgenommen sind, wobei die Behälter (12) zumindest während eines Förderabschnittes im Bereich einer innerhalb der Behälterbehandlungsmaschine (10) rotierenden oder einen Teil der Behälterbehandlungsmaschine (10) bildenden rotierenden Transportvorrichtung (18) jeweils von ihren zugehörigen Transportschuhen (14) getrennt und mittels Halteeinrichtungen an der rotierenden Transportvorrichtung (18) positioniert, gehalten und einer Behandlung unterzogen werden, wonach die Behälter (12) nach dem Verlassen der rotierenden Transportvorrichtung (18) wieder in die ihnen jeweils zugeordneten Transportschuhe (14) eingefügt werden, wobei das Verfahren eine temporäre Fixierung der von den Behältern (12) getrennten Transportschuhe (14) in der rotierenden Transportvorrichtung (14) in einer zu einer ersten Transportebene (44) der Behälter (12) parallelen zweiten Transportebene (46) vorsieht,
wobei der rotierenden Transportvorrichtung (18) in Transportrichtung (28) der Behälter (12) ein Zuführbereich (30) zum Zuführen der Behälter (12) sowie der jeweils zugehörigen Transportschuhe (14) vorgeordnet ist, wobei der Zuführbereich (30) eine Trenneinrichtung (48) zum Herausziehen der Behälter (12) aus den jeweiligen Transportschuhen (14) und zur separaten Übergabe der Behälter (12) sowie der Transportschuhe (14) an die rotierende Transporteinrichtung (18) umfasst,
wobei die Trenneinrichtung (48) im Bereich eines rotierenden Einlaufsterns (32), der tangential mit der als Etikettierkarussell (20) ausgebildeten rotierenden Transportvorrichtung (18) kämmt, angeordnet ist,
und wobei die Trenneinrichtung (48) insbesondere ein erstes Schienensystem (50) zum Absenken der Transportschuhe (14) und zu deren Überleitung auf das Niveau der zweiten Transportebene (46) umfasst.

8. Verfahren nach Anspruch 7, bei dem die Behälter (12) bei ihrer Behandlung in der ersten Transportebene (44) in einem Außenumfangsbereich der rotierenden Transportvorrichtung (18) separat von ihren jeweils zugehörigen Transportschuhen (14) fixiert und etikettiert werden.

9. Verfahren nach Anspruch 7 oder 8, bei dem die Behälter (12) im Bereich eines rotierenden Einlaufsterns (32), der tangential mit der als Etikettierkarussell (20) ausgebildeten rotierenden Transportvorrichtung (18) kämmt, von ihren jeweils zugehörigen Transportschuhen (14) getrennt werden, und/oder bei dem die Behälter (12) im Bereich eines rotierenden Auslaufsterns (36), der tangential mit der als Etikettierkarussell (20) ausgebildeten rotierenden Transportvorrichtung (18) kämmt, wieder in die ihnen jeweils zugehörigen Transportschuhe (14) eingesetzt werden.

10. Verfahren nach Anspruch 9, bei dem die Behälter (12) von ihren jeweils zugehörigen Transportschuhen (14) mittels eines ersten Schienensystems (50) getrennt werden, das die Transportschuhe (14) auf das Niveau der zweiten Transportebene (46) führt und absenkt.

11. Verfahren nach einem der Ansprüche 7 bis 10, bei dem die Transportschuhe (14) in einer im Wesentlichen mit einer Längserstreckungsrichtung der in der ersten Transportebene (44) vertikal stehenden Behälter (12) fluchtenden Position in der zweiten Transportebene (46) in der rotierenden Transportvorrichtung (18) befördert werden.

12. Verfahren nach Anspruch 9, insbesondere auch nach einem der Ansprüche 10 oder 11, sofern vom Anspruch 9 abhängig, bei dem die Behälter (12) mittels eines zweiten Schienensystems (54) mit ihren jeweils zugehörigen Transportschuhen (14) zusammengeführt werden, das die Transportschuhe (14) im Bereich des rotierenden Auslaufsterns (36) wieder auf das Niveau der ersten Transportebene (44) führt und dabei anhebt.

13. Verfahren nach einem der Ansprüche 7 bis 12, bei dem die Transportschuhe (14) in der rotierenden Transportvorrichtung (18) im Bereich der zweiten Transportebene (46) jeweils unterhalb von drehbaren Auflagetellern (24) für die Behälter (12) temporär gehalten bzw. fixiert werden.

## Claims

1. A container treatment machine (10) for the handling and/or treatment, in particular, of non-accumulatable containers (12) and/or of containers with irregular and/or non-cylindrical outer contours, wherein the containers (12) are transported and/or handled within partial conveying stages of the container treatment machine (10) in each instance by means of transport pucks (14), in which partial sections of the particular containers (12) are accommodated in a standing and approximately form-fitting manner, wherein the container treatment machine (10) has at least one transport apparatus (18), which rotates about a substantially vertical machine axis (16) and is used for the temporary accommodation and fixing of the containers (12), which have been removed from their transport pucks (14), for the purpose of their treatment in the area of a first transport level (44), wherein the individual transport pucks (14) are being held in the rotating transport apparatus (18) in a position spatially assigned to their particular containers (12), which position is arranged within a second transport level (46) below the first transport level (44) and disposed parallel thereto,
**characterized in that** a feed area (30) for feeding the containers (12) and the in each instance associated transport pucks (14) is disposed upstream of the rotating transport apparatus (18) in transport direction (28) of the containers (12), wherein the feed area (30) comprises a separating device (48) for the extraction of the containers (12) from the particular transport pucks (14) and for the separate transfer of the containers (12) and of the transport pucks (14) to the rotating transport device (18),
wherein the separating device (48) is disposed in the area of a rotating infeed star (32), which tangentially intermeshes with the rotating transport apparatus (18) that is designed as labelling carousel (20), and
wherein the separating device (48) in particular comprises a first track system (50) for lowering the transport pucks (14) and for diverting them to the height of the second transport level (46).

2. The container treatment machine according to claim 1, in which a discharge area (34) for discharging and forwarding the containers (12) and the in each instance associated transport pucks (14) to further transport stations and/or handling stations is disposed downstream of the rotating transport apparatus (18) in transport direction (28) of the containers (12), wherein the discharge area (34) comprises a merging device (52) for the insertion of the containers (12) into the particular transport pucks (14) and for the further transport of the containers (12) together that are arranged in the transport pucks (14).

3. The container treatment machine according to claim 2, in which the merging device (52) is disposed in the area of a rotating outfeed star (36), which tangentially intermeshes with the rotating transport apparatus (18) that is designed as labelling carousel (20).

4. The container treatment machine according to claim 3, in which the merging device (52) comprises a second track system (54) for guiding and lifting the transport pucks (14) to the height of the first transport level (44) in the area of the rotating outfeed star (36).

5. The container treatment machine according to one of the claims 2 to 4, in which the separating device (48) is deactivatable together with the merging device (52), whereby the containers (12) remain in the area of the rotating transport apparatus (18) in the particular transport pucks (14) while being fixed and treated.

6. The container treatment machine according to one of the claims 1 to 5, in which the rotating transport apparatus (18) is formed by a labelling carousel (20) for labelling the containers (12) that have in each instance been separated from the transport pucks (14).

7. A method for the handling and/or treatment, in particular, of non-accumulatable containers (12) and/or of containers with irregular and/or non-cylindrical outer contours, and/or for the feeding or discharging of the containers (12) to or from a container treatment machine (10), as applicable, which containers (12) are in each instance transported and/or handled by means of transport pucks (14) in which partial sections of the particular containers (12) are accommodated in a standing and approximately form-fitting manner, wherein the containers (12), at least during a conveying stage, are separated from their associated transport pucks (14) and positioned and held by means of holding devices at the rotating transport apparatus (18) and subjected to a treatment in each instance in the area of a transport apparatus (18) rotating within the container treatment machine (10) or in the area of a rotating transport apparatus (18) forming a part of the container treatment machine (10), whereupon the containers (12), after leaving the rotating transport apparatus (18), are re-inserted into the transport pucks (14) in each instance assigned to them, wherein the method provides a temporary fixing of the transport pucks (14), which have been separated from the containers (12), in the rotating transport apparatus (14) at a second transport level (46) that is parallel to a first transport level (44) of the containers (12), wherein a feed area (30) for feeding the containers (12) and the in each instance associated transport pucks (14) is disposed upstream of the rotating transport apparatus (18) in transport direction (28) of the containers (12), wherein the feed area (30) comprises a separating device (48) for the extraction of the containers (12) from the particular transport pucks (14) and for the separate transfer of the containers (12) and of the transport pucks (14) to the rotating transport device (18), wherein the separating device (48) is disposed in the area of a rotating infeed star (32), which tangentially intermeshes with the rotating transport apparatus (18) that is designed as labelling carousel (20), and
wherein the separating device (48) in particular comprises a first track system (50) for lowering the transport pucks (14) and for diverting them to the level of the second transport level (46).

8. The method according to claim 7, in which the containers (12) are fixed and labelled separately from their in each instance associated transport pucks (14) during their treatment in the first transport level (44) in an outer circumference area of the rotating transport apparatus (18).

9. The method according to claim 7 or 8, in which the containers (12) are separated from their in each instance associated transport pucks (14) in the area of a rotating infeed star (32), which tangentially intermeshes with the rotating transport apparatus (18) that is designed as labelling carousel (20), and/or in which the containers (12) are re-inserted into the transport pucks (14) in each instance associated with them in the area of a rotating outfeed star (36), which tangentially intermeshes with the rotating transport apparatus (18) that is designed as labelling carousel (20).

10. The method according to claim 9, in which the containers (12) are separated from their in each instance associated transport pucks (14) by means of a first track system (50), which guides and lowers the transport pucks (14) to the height of the second transport level (46).

11. The method according to one of the claims 7 to 10, in which the transport pucks (14) are conveyed at the second transport level (46) in the rotating transport apparatus (18) in a position substantially aligned with a longitudinal extension direction of the containers (12) standing vertically at the first transport level (44).

12. The method according to claim 9, in particular also according to one of the claims 10 or 11 if dependent on claim 9, in which the containers (12) are merged with their in each instance associated transport pucks (14) by means of a second track system (54), which guides and in the process lifts the transport pucks (14) back to the height of the first transport level (44) in the area of the rotating outfeed star (36).

13. The method according to one of the claims 7 to 12, in which the transport pucks (14) are temporarily held or fixed, as applicable, in the rotating transport apparatus (18) in the area of the second transport level (46), in each instance below rotatable support plates (24) for the containers (12).

## Revendications

1. Machine de traitement de récipients (10) pour manipuler et/ou traiter des récipients (12) en particulier non aptes à l'accumulation et/ou de tels récipients ayant des contours extérieurs irréguliers et/ou non cylindriques, dans lequel les récipients (12) sont transportés et/ou manipulés chacun, dans des sections partielles de transport de la machine de traitement de récipients (10), au moyen de patins de transport (14) dans lesquels des sections partielles des récipients (12) respectifs sont reçues debout et approximativement à engagement positif, dans lequel la machine de traitement de récipients (10) comprend au moins un dispositif de transport (18) qui tourne autour d'un axe de machine (16) pour l'essentiel vertical et est destiné à recevoir et fixer temporairement les récipients (12) retirés de leurs patins de transport (14), au niveau d'un premier plan de transport (44) en vue de leur traitement, dans lequel les patins de transport (14) individuels sont maintenus dans une position associée dans l'espace à leurs récipients (12) respectifs, à l'intérieur d'un deuxième plan de transport (46) dans le dispositif de transport (18) rotatif, qui est situé au-dessous du premier plan de transport (44) et disposé parallèlement à celui-ci,
**caractérisée par le fait qu'**une zone d'amenée (30) destinée à amener les récipients (12) ainsi que les patins de transport (14) respectivement associés est disposée en amont du dispositif de transport (18) rotatif dans la direction de transport (28) des récipients (12), dans lequel la zone d'amenée (30) comprend un dispositif de séparation (48) pour retirer les récipients (12) des patins de transport (14) respectifs et pour transférer séparément les récipients (12) ainsi que les patins de transport (14) au dispositif de transport (18) rotatif,
dans lequel le dispositif de séparation (48) est disposé au niveau d'une étoile d'entrée (32) rotative qui engrène tangentiellement avec le dispositif de transport (18) rotatif conçu en tant que carrousel d'étiquetage (20),
et dans lequel le dispositif de séparation (48) comprend en particulier un premier système de rail (50) destiné à abaisser les patins de transport (14) et à transférer ceux-ci au niveau du deuxième plan de transport (46).

2. Machine de traitement de récipients selon la revendication 1, dans laquelle une zone d'évacuation (34) destinée à évacuer et à transférer les récipients (12) ainsi que les patins de transport (14) respectivement associés à d'autres postes de transport et/ou de manipulation est disposée en aval du dispositif de transport (18) rotatif dans la direction de transport (28) des récipients (12), ladite zone d'évacuation (34) comprenant un dispositif d'assemblage (52) pour pousser les récipients (12) dans les patins de transport (14) respectifs et pour continuer à transporter en commun les récipients (12) situés dans les patins de transport (14).

3. Machine de traitement de récipients selon la revendication 2, dans laquelle ledit dispositif d'assemblage (52) est disposé au niveau d'une étoile de sortie (36) rotative qui engrène tangentiellement avec le dispositif de transport (18) rotatif conçu en tant que carrousel d'étiquetage (20).

4. Machine de traitement de récipients selon la revendication 3, dans laquelle le dispositif d'assemblage (52) comprend un deuxième système de rail (54) destiné à guider et à soulever les patins de transport (14) dans la zone de l'étoile de sortie (36) rotative jusqu'au niveau du premier plan de transport (44).

5. Machine de traitement de récipients selon l'une quelconque des revendications 2 à 4, dans laquelle le dispositif de séparation (48) peut être désactivé en commun avec le dispositif d'assemblage (52) ce par quoi les récipients (12) restent dans les patins de transport (18) respectifs lors de leur fixation et traitement au niveau du dispositif de transport (18) rotatif.

6. Machine de traitement de récipients selon l'une quelconque des revendications 1 à 5, dans laquelle le dispositif de transport (18) rotatif est constitué par un carrousel d'étiquetage (20) destiné à étiqueter les récipients (12) séparés chacun des patins de transport (14).

7. Procédé de manipulation et/ou de traitement de récipients (12) en particulier non aptes à l'accumulation et/ou de tels récipients ayant des contours extérieurs irréguliers et/ou non cylindriques, et/ou d'amenée et/ou d'évacuation des récipients (12) vers ou bien d'une machine de traitement de récipients (10), lesquels récipients (12) sont transportés et/ou manipulés chacun au moyen de patins de transport (14) dans lesquels des sections partielles des récipients (12) respectifs sont reçues debout et approximativement à engagement positif, dans lequel les récipients (12), au moins durant un tronçon de transport, sont séparés chacun de leurs patins de transport associés (14) au niveau d'un dispositif de transport (18) rotatif tournant à l'intérieur de la machine de traitement de récipients (10) ou formant une partie de la machine de traitement de récipients (10), et sont positionnés et maintenus au moyen de dispositifs de maintien sur ledit dispositif de transport (18) rotatif et sont soumis à un traitement, ce après quoi les récipients (12), après qu'ils ont quitté le dispositif de transport (18) rotatif, sont à nouveau insérés dans les patins de transport (14) qui leur sont respectivement associés, dans lequel le procédé prévoit une fixation temporaire des patins de transport (14) séparés des récipients (12), dans le dispositif de transport (18) rotatif, dans un deuxième plan de transport (46) parallèle à un premier plan de transport (44) des récipients (12), dans lequel une zone d'amenée (30) destinée à amener les récipients (12) ainsi que les patins de transport (14) respectivement associés est disposée en amont du dispositif de transport (18) rotatif dans la direction de transport (28) des récipients (12), dans lequel la zone d'amenée (30) comprend un dispositif de séparation (48) pour retirer les récipients (12) des patins de transport (14) respectifs et pour transférer séparément les récipients (12) ainsi que les patins de transport (14) au dispositif de transport (18) rotatif,
dans lequel le dispositif de séparation (48) est disposé au niveau d'une étoile d'entrée (32) rotative qui engrène tangentiellement avec le dispositif de transport (18) rotatif conçu en tant que carrousel d'étiquetage (20),
et dans lequel le dispositif de séparation (48) comprend en particulier un premier système de rail (50) destiné à abaisser les patins de transport (14) et à transférer ceux-ci au niveau du deuxième plan de transport (46).

8. Procédé selon la revendication 7, dans lequel les récipients (12), lorsqu'ils sont traités dans le premier plan de transport (44), sont fixés et étiquetés de manière séparée de leurs patins de transport (14) respectivement associés dans une zone périphérique extérieure du dispositif de transport (18) rotatif.

9. Procédé selon la revendication 7 ou 8, dans lequel les récipients (12) sont séparés de leurs patins de transport (14) respectivement associés, au niveau d'une étoile d'entrée (32) rotative qui engrène tangentiellement avec le dispositif de transport (18) rotatif conçu en tant que carrousel d'étiquetage (20), et/ou dans lequel les récipients (12) sont à nouveau insérés dans les patins de transport (14) qui leur sont respectivement associés, au niveau d'une étoile de sortie (36) rotative qui engrène tangentiellement avec le dispositif de transport (18) rotatif conçu en tant que carrousel d'étiquetage (20).

10. Procédé selon la revendication 9, dans lequel les récipients (12) sont séparés de leurs patins de transport (14) respectivement associés au moyen d'un premier système de rail (50) qui guide et abaisse les patins de transport (14) jusqu'au niveau du deuxième plan de transport (46).

11. Procédé selon l'une quelconque des revendications 7 à 10, dans lequel les patins de transport (14) sont transportés dans une position dans le deuxième plan de transport (46) dans le dispositif de transport (18) rotatif, qui est pour l'essentiel alignée avec une direction d'extension longitudinale des récipients (12) posés verticalement dans le premier plan de transport (44).

12. Procédé selon la revendication 9, en particulier également selon l'une quelconque des revendications 10 ou 11, si elle dépend de la revendication 9, dans lequel les récipients (12) sont réunis à leurs patins de transport (14) respectivement associés au moyen d'un deuxième système de rail (54) qui guide les patins de transport (14) dans la zone de l'étoile de sortie (36) rotative à nouveau jusqu'au niveau du premier plan de transport (44) tout en les soulevant.

13. Procédé selon l'une quelconque des revendications 7 à 12, dans lequel les patins de transport (14) sont chacun maintenus ou bien fixés temporairement, dans le dispositif de transport (18) rotatif au niveau du deuxième plan de transport (46), au-dessous de plateaux d'appui (24) rotatifs pour les récipients (12).
